# EUROPÄISCHE PATENTSCHRIFT

(11) **EP 1 308 235 B1**
(45) Veröffentlichungstag und Bekanntmachung des Hinweises auf die Patenterteilung: **24.11.2004**
(21) Anmeldenummer: 02011950.9
(22) Anmeldetag: 29.05.2002
(51) Int. Cl.: B23K 26/06, G02B 5/30, G02B 27/28

(54) **Verfahren und Vorrichtung zur Steuerung der Laserstrahlenergie**
Method and device for controlling the energy of a laserbeam
Méthode et dispositif de commande de l'énergie d'un faisceau laser

(30) Priorität: 06.11.2001 DE 10154363
(43) Veröffentlichungstag der Anmeldung: 07.05.2003
(60) Teilanmeldung: 04000631.4
(73) Patentinhaber: RAYLASE AG, 82234 Wessling (DE)
(72) Erfinder: Hastings, Stephen, 82152 Krailling (DE); Dullin, Peter, 82152 Krailling (DE); Gill, Alistair, 82152 Krailling (DE); Wagner, Erwin, 82152 Krailling (DE); von Jan, Peter, 82152 Krailling (DE); Hauck, Wolfgang, 82152 Krailling (DE)
(74) Vertreter: Liesegang, Eva

(56) Entgegenhaltungen:
- WO-A-01/51244
- US-A- 2 423 321
- US-A- 4 775 220
- PATENT ABSTRACTS OF JAPAN vol. 1995, no. 09, 31. Oktober 1995 (1995-10-31) & JP 07 151982 A (YUSEISHO TSUSHIN SOGO KENKYUSHO), 16. Juni 1995 (1995-06-16)
- PATENT ABSTRACTS OF JAPAN vol. 014, no. 573 (E-1015), 19. Dezember 1990 (1990-12-19) & JP 02 249285 A (TOSHIBA CORP), 5. Oktober 1990 (1990-10-05)

## Beschreibung

Die Erfindung betrifft eine Vorrichtung und ein Verfahren zum Steuern der Laserstrahlenergie eines Laserstrahls. Die Erfindung basiert auf dem Verfahren und der Vorrichtung, die in der internationalen Patentanmeldung WO-A-01/51244 beschrieben sind.

Die WO-A-01/51244 beschreibt ein Verfahren und eine Vorrichtung zum Steuern des Pegels der Laserstrahlenergie eines Laserstrahls, der über ein Target streicht, wobei wenigstens ein Laserstrahl-Ablenkmodul verwendet wird und das Laserstrahl-Ablenkmodul eine motorgetriebene Ablenkeinrichtung zum Führen des Laserstrahls über das Target und eine Polarisationssteuereinrichtung aufweist, wobei die Polarisationssteuereinrichtung die Strahlenergie des Laserstrahls, der über das Target streicht, abhängig von der Bewegung der Ablenkeinrichtung steuert. Die Polarisationssteuereinrichtung umfaßt insbesondere eine oder zwei Brewster-Elemente, z.B. Brewster-Platten oder Brewster-Fenster, die um eine Achse drehbar sind, welche parallel zur Ausbreitungsrichtung des Laserstrahls ist. Die eine oder zwei Brewster-Elemente können um einen Winkel zwischen 0° und 90° gedreht werden, um die Transmission des Laserstrahls zwischen 0% und 100% zu steuern. Bei einem Laserstrahl mit nur einer Polarisationsrichtung kann ein Brewster-Element, die auf den richtigen Brewster-Winkel eingestellt ist, dazu verwendet werden, zwischen 0% und 100% der polarisierten Strahlung hindurchzulassen. Die Drehung des Brewster-Elements wird mit der Bewegung der Ablenkeinrichtung, welche den Laserstrahl über die zu belichtende Fläche, das Target, führt,synchronisiert.

Auf die WO-A-01/51244 wird in ihrer Gesamtheit Bezug genommen.

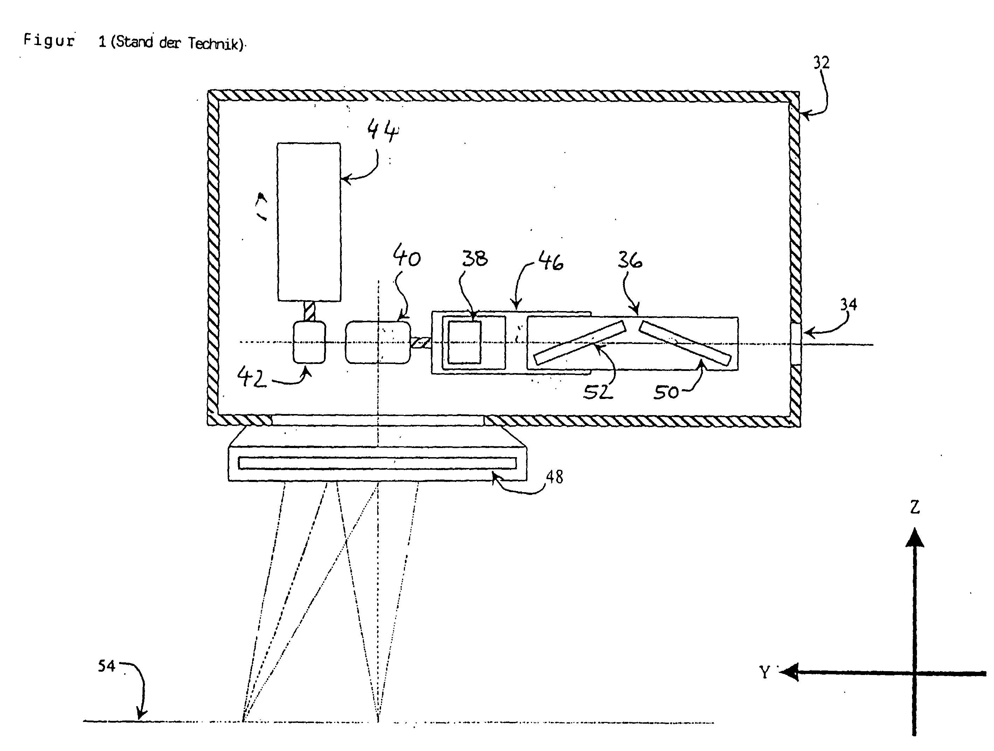

Fig. 1 zeigt eine Darstellung eines Laserstrahl-Ablenkmoduls gemäß der WO-A-01/51244. Die Ablenkeinrichtung ist in einem Laserstrahl-Ablenkmodul oder Scankopf 32 integriert, in den durch eine Öffnung 34 ein linear polarisierter Laserstrahl eintritt. Das Laserstrahl-Ablenkmodul 32 umfaßt eine Polarisationssteuereinrichtung 36, die entlang der Strahlachse vor dem Ablenkmodul 32 integriert oder angebracht werden kann, eine Strahlaufweitungsoptik 38, einen Y-Achsen-Spiegel 40, einen X-Achsen-Spiegel 42, zwei galvanometrische Motoren 44 und 46 zum Drehen der zwei Spiegel 40 bzw. 42 und eine f(θ)-Fokussierlinse 48. Die Polarisationssteuereinrichtung 36 der Ausführungform der Fig. 1 umfaßt ein erstes Brewster-Element 50 und ein zweites Brewster-Element 52. In einer alternativen Ausführungsform kann diese Technik auch in Verbindung mit separaten Ablenkeinrichtungen und/oder fokussierenden Elementen vor oder nach dem Laserstrahl-Ablenkmodul eingesetzt werden.

In einer weiteren alternativen Ausführungsform umfaßt die Polarisationssteuereinrichtung nur ein einziges Brewster-Element, um im wesentlichen denselben Effekt, wie oben beschrieben, zu erreichen.

In der gezeigten Ausführungsform wird ein Kohlendioxid (CO₂)-Laser zum Erzeugen des Laserstrahls verwendet, der in genau einer Richtung linear polarisiert ist. Der Fachmann wird jedoch verstehen, daß auch jede andere geeignete Laserquelle verwendet werden kann. Der Laserstrahl tritt in das Laserstrahl-Ablenkmodul 32 durch die Öffnung 34 ein und geht durch die Polarisationssteuereinrichtung 36, in der zwei einander gegenüber liegende ZnSe-Brewster-Elemente 50, 52 auf die richtigen Brewster-Winkel in bezug auf die Wellenlänge des Laserstrahls eingestellt sind. Die Brewster-Elemente 50, 52 können um 90° gedreht werden, um den Laserstrahl zu dämpfen, so daß 100% bis 0% der Laserstrahlenergie durch die Brewster-Elemente 50, 52 hindurchgelassen wird, wenn sie gemeinsam von 0° bis 90° um die Laserstrahlachse gedreht werden. Für andere Arten von Lasern können andere Materialien für die Brewster-Elemente gewählt werden. Verschiedene Beschichtungen können auf den Flächen der Brewster-Elemente aufgebracht werden, welche die maximale und minimale Transmission, die Ausgangspolarisation und die erforderliche Drehung der Brewster-Elemente zum Steuern der Transmission verändern können. In der Praxis beträgt die maximale Transmission eines Brewster-Elements oder eines Brewster-Elementes der oben beschriebenen Art "nur" 99,98%. Für die Zwecke der vorliegenden Erfindung kann jedoch eine maximale Transmission von 100% angenommen werden. Wenn daher in dem vorliegenden Text eine Durchlässigkeit von 100% angegeben ist, bezieht sich dies auf die maximale Transmission des jeweiligen Brewster-Elementes, die bei der betrachteten Ausführungsform 99,98% beträgt.

Der Teil der Laserstrahlenergie, der bei dieser Ausführungsform durch die Brewster-Elemente 52, 50 hindurchgelassen wird, geht durch eine Strahlaufweitungsoptik 38, welche den Laserstrahldurchmesser erweitert, und wird dann von der Oberfläche des von einem Galvanometermotor angetriebenen Y-Achsen-Spiegels 40 abgelenkt, um dann von der Oberfläche des von dem Galvonometermotor angetriebenen X-Achsen-Spiegels 42 abgelenkt zu werden und durch die f(θ)-Fokussierlinse 48 zu gehen, die den Laserstrahl auf einen feinen Punkt auf einer Zieloberfläche 54 fokussiert. Die Intensität des Laserstrahls, der die Zielfläche 54 überstreicht, wird durch die Steuerung der Drehung der Brewster-Elemente 52, 50 in Abhängigkeit von der Position, Drehung und Winkelgeschwindigkeit der motorgetriebenen Spiegel 40, 42 präzise gesteuert.

Es ist wichtig, daß die Beschleunigungszeiten bis zur und von der maximal erforderlichen Geschwindigkeit der kombinierten XY-Strahlposition auf der Zieloberfläche mit der Transmissionskurve der sich drehenden Brewster-Elemente in Einklang gebracht werden. In der Praxis sollten die Beschleunigungszeiten für die Bewegung des Strahls, der die Zielfläche in der X- oder Y-Richtung und besonders wichtig in der kombinierten XY-Richtung überstreicht, definiert sein. Es sei angenommen, daß diese mögliche Beschleunigungszeit bestimmt wird durch die Geschwindigkeit der Polarisationssteuereinrichtung 36 beim Drehen und somit Öffnen und Schließen der Brewster-Elemente. Beispielsweise sei angenommen, daß es 1 ms dauert, um das Brewster-Element mit einer annehmbaren Toleranz von 0 % auf 100 % zu öffnen, sowie 1 ms, um es zu schließen, so daß das Laserstrahl-Ablenkmodul 32 und insbesondere die kombinierten Scanspiegel 40, 42 die maximale Geschwindigkeit innerhalb von 1 ms erreichen sollten. Da beschichtete, voll vergütete Brewster-Elemente eine Transmission von 0 % haben, wenn sie auf den richtigen Winkel eingestellt sind, ist es nicht notwendig, den Laserstrahl zwischen den einzelnen Verarbeitungs- oder Markiervorgängen abzuschalten.

Die PCT-Anmeldung beschreibt die Funktion der Brewster-Elemente, die auf einen bestimmten Brewster-Winkel eingestellt sind, zum Steuern der Laserleistung durch Reflexion oder Transmission eines einzelnen, richtungspolarisierten CO₂-Laserstrahls.

Das gleiche Verfahren kann auf jeden einzelnen richtungspolarisierten Energiestrahl angewendet werden, soweit das richtige Material für die Brewster-Elemente und der richtige Brewster-Winkel, der zu der Wellenlänge der Laserstrahlenergie gehört, gewählt werden.

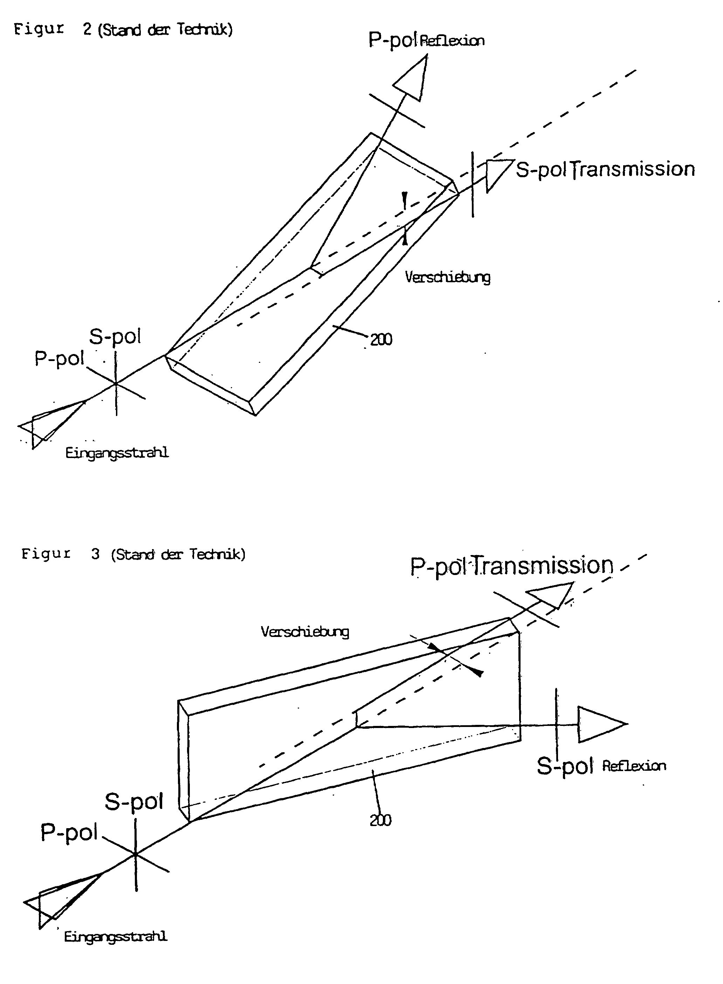

Fig. 2 zeigt, wie ein Laserstrahl, der entweder in die P-Pol (parallel) oder S-Pol (senkrecht) Richtung polarisiert ist, mit einem einzelnen Brewster-Element 200 reflektiert oder hindurchgelassen werden kann. Zum Zweck der Darstellung sind sowohl P-Polarisation als auch S-Polarisation in der Zeichnung dargestellt. Ein Fachmann wird jedoch verstehen, daß in der Praxis ein CO₂-Laserstrahl im wesentlichen nur eine Art von Polarisation (Linearpolarisation) aufweisen kann. Mit Bezug auf Fig. 2, wenn die Eingangspolarisation P-Pol ist, wird der Strahl reflektiert. Wenn die Eingangspolarisation S-Pol ist, wird der Eingangsstrahl hindurchgelassen.

Es besteht eine Schwierigkeit darin, daß der Laserstrahl um einen Faktor versetzt wird, der sich aus dem durch den Brewster-Winkel gegebenen Einfallswinkel und aus der Dicke des Brewster-Elements selbst ergibt.

Fig. 3 zeigt das Brewster-Element 200, das um 90° gedreht wurde, wobei nun der P-Pol-Strahl hindurchgelassen und der S-Pol-Strahl reflektiert wird. Der Laserstrahl wird um exakt den gleichen Faktor versetzt wie in Fig. 2, unterscheidet sich jedoch dadurch, daß er nun um 90° um die Mittellinie gedreht wurde.

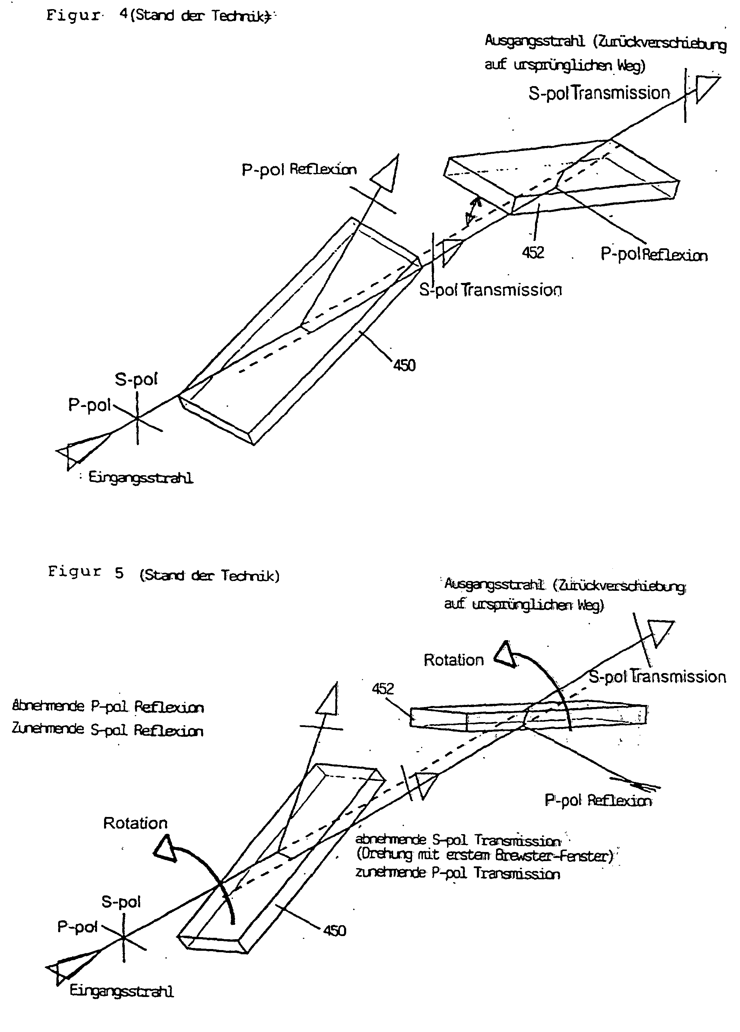

Fig. 4 zeigt zwei zueinander ausgerichtete Brewster-Elemente 450, 452, die es ermöglichen, daß der Ausgangsstrahl des Lasers zum Eingangsstrahl des Lasers nicht versetzt ist, weil das zweite Brewster-Element 452 die durch das erste Brewster-Element 450 erzeugte Parallelverschiebung kompensiert. In der Realität und abhängig von der Beschichtung der Brewster-Elemente 450, 452 wird der von dem ersten Brewster-Element 450 reflektierte Teil des P-Pol-Laserstrahls einen sehr hohen Prozentsatz des P-Pol-Eingangsstrahls umfassen, so daß nur noch ein sehr kleiner Prozentsatz von dem zweiten Brewster-Element 452 reflektiert werden muß.

Fig. 5 zeigt die zwei Brewster-Elemente 450, 452, die gemeinsam in dieselbe Richtung gedreht werden. Wenn die Drehung zunimmt, nimmt der Anteil des von dem ersten Brewster-Element 450 reflektierten P-Pol-Strahls ab und die P-Pol-Durchlässigkeit nimmt zu. Entsprechend nimmt mit der zunehmenden Drehung der Anteil der durch das erste Brewster-Element 450 durchgelassenen S-Pol-Laserstrahlung ab und die Reflexion der S-Pol-Laserstrahlung nimmt zu.

Es ist wichtig, zu beachten, daß die Laserstrahlpolarisation, welche das erste Brewster-Element 450 verläßt, mit der Drehung dieses ersten Brewster-Elements 450, abhängig von dessen Beschichtung, gedreht wird. Fig. 5 zeigt, daß jede P-Pol-Laserstrahlung, die durch das erste Brewster-Element 450 hindurchgelassen wird, daher von dem zweiten Brewster-Element 452 reflektiert wird. Und entsprechend wird jede S-Polarisation, die durch das erste Brewster-Element 450 hindurchgelassen wird, ebenfalls von dem zweiten Brewster-Element 452 hindurchgelassen.

Das zweite Brewster-Element 452 hat daher auf die Leistungssteuerung keine wesentliche zusätzliche Wirkung. Jedoch ist es für die Korrektur der Strahlverschiebung des Laserstrahls durch das erste Brewster-Element wesentlich.

Bei dem in Fig. 5 gezeigten Verfahren müssen die zwei Brewster-Elemente 450, 452 gemeinsam um 90° gedreht werden, um die Übertragung oder Durchlässigkeit vom Maximum zum Minimum zu steuern und die Verschiebung des Laserstrahls auszugleichen.

Druckschrift US 4,632,512 beschreibt ein Verfahren zur sequentiellen Dämpfung, Modulation und Polarisation, wobei die Laserstrahlquelle einen Laserstrahl emittiert, der in eine Richtung polarisiert ist. Der zur Polarisation benutzte Teil der Vorrichtung besteht aus einem feststehenden Paar symmetrische angeordneter Brewster-Elemente, wobei die Symmetrieachse des Polarisationsteils der Anordnung senkrecht zur Strahlachse liegt und die Brewster-Elemente zur Strahlachse in einem Winkel geneigt sind, der näherungsweise dem Brewster-Winkel entspricht.

US-A-2,423,321 beschreibt eine Vorrichtung zum Steuern der Lichtmenge, die durch ein optisches Element geht, wobei zwei Polarfilter verwendet werden, welche in entgegengesetzte Richtungen gedreht werden, um die Lichtstrahlenergie zu verändern. Diese Schrift befaßt sich nicht mit Laserstrahlen und/oder hohen Lichtleistungen.

Es ist die Aufgabe der vorliegenden Erfindung, das Verfahren und die Vorrichtung zum Steuern eines Laserstrahls weiter zu verbessern.

Diese Aufgabe wird durch ein Verfahren mit den Merkmalen von Patentanspruch 1 sowie durch eine Vorrichtung mit den Merkmalen von Anspruch 7 gelöst.

Zur Lösung dieser Aufgabe sieht die Erfindung ein Verfahren und eine Vorrichtung zum Steuern von Laserenergie vor, welche mindestens zwei Brewster-Elemente verwendet, die entlang einer Achse ausgerichtet sind, die parallel zur Richtung des Laserstrahls ist, und die um diese Achse drehbar sind, wobei das erste Brewster-Element in eine Richtung und das zweite Brewster-Element in die andere Richtung gedreht wird, wobei mehrere Paare Brewster-Elemente verwendet werden, die entlang der Laserstrahlachse ausgerichtet sind.

In einer ersten bevorzugten Ausführungsform der Erfindung werden zwei beschichtete Brewster-Elemente verwendet, von den jedes eine Durchlässigkeit von 100% (in der Praxis 99,98%) bis 0% hat, wenn es um 90° gedreht wird. Erfindungsgemäß werden diese zwei Brewster-Elemente nur jeweils um ungefähr +/- 45° gedreht, um die Transmission der Laserstrahlenergie vom Maximum zum Minimum zu steuern.

Gemäß einer anderen Ausführungsform der Erfindung werden unbeschichtete Brewster-Elemente verwendet, die eine Transmission von ungefähr 100% bis 25% haben, wenn sie um 90° gedreht werden. Der Vorteil der unbeschichteten Brewster-Elemente ist, daß sie Laserstrahlen mit sehr hoher Leistung hindurchlassen können, im Bereich von bis zu etwa 6 kW, während die beschichteten Brewster-Elemente durch Laserstrahlen mit einer Leistung in dieser Größenordnung beschädigt werden und daher auf die Transmission von Laserstrahlen mit einer deutlich geringeren Leistung beschränkt sind. Die Brewster-Elemente jedes Paares werden in entgegengesetzte Richtungen um einen Winkel zwischen 45° und 90° gedreht, wie weiter unten im einzelnen näher erläutert ist. Dadurch werden ein Verfahren und eine Vorrichtung zum Steuern von Laserstrahlen hoher Leistung geschaffen, die kostengünstig und wenig komplex sind.

Mit anderen Worten betrifft die Erfindung ein Verfahren und eine Vorrichtung zur Feinsteuerung und Regelung der Laserenergie, die auf ein Target auftrifft, in direkter Beziehung zu der Geschwindigkeit des fokussierten Strahls oder Lichtflecks auf diesem Target.

Die Erfindung sieht auch eine Vorrichtung mit den Merkmalen von Anspruch 7 vor.

Die Erfindung ist in folgenden anhand bevorzugter Ausführungsformen mit Bezug auf die Zeichnungen näher erläutert. In den Figuren:
- Fig. 1: zeigt eine schematische Darstellung einer Laserstrahl-Richteinrichtung gemäß dem Stand der Technik;
- Fig. 2: zeigt ein Beispiel eines Brewster-Element zur Erläuterung des Verhaltens eines polarisierten Laserstrahls, der von dem Brewster-Element reflektiert oder hindurchgelassen wird;
- Fig. 3: zeigt das Brewster-Element der Fig. 2, nachdem es um 90° gedreht wurde;
- Fig. 4: zeigt eine Anordnung aus zwei Brewster-Elementen, die in der Vorrichtung der Fig. 1 eingesetzt werden kann;
- Fig. 5: zeigt die Anordnung der zwei Brewster-Elementen der Fig. 4, wobei die Brewster-Elemente gemeinsam in dieselbe Richtung gedreht werden;
- Fig. 6: zeigt eine Anordnung aus zwei Brewster-Elementen zur Erläuterung der Erfindung, die in entgegengesetzte Richtung gedreht werden, um die Transmissionskurve der Fig. 7 zu erhalten;
- Fig. 7: zeigt ein Diagramm der Transmissionskurven eines Laserstrahls, wenn zwei beschichtete Brewster-Elemente gemäß Fig. 6 verwendet werden;
- Fig. 8 und 9: zeigen eine Anordnung zum mechanischen Antreiben der zwei Brewster-Elemente der Fig. 6, synchron und in entgegengesetzten Richtungen, wobei in Fig. 8 die Brewster-Elemente mit 0° zueinander ausgerichtet sind und in Fig. 9 um +/- 45° gedreht sind;
- Fig. 10: zeigt eine Anordnung aus 6 Brewster-Elementen, mit einer Ausrichtung von 0° gemäß einer Ausführungsform der Erfindung;
- Fig. 11: zeigt die Anordnung der Fig. 10, wobei die Brewster-Elemente erfindungsgemäß gedreht wurden; und
- Fig. 12: zeigt ein Diagramm der Transmissionskurven eines Laserstrahls, wenn drei Paare Brewster-Elemente verwendet werden, wie in den Fig. 10 und 11 gezeigt.

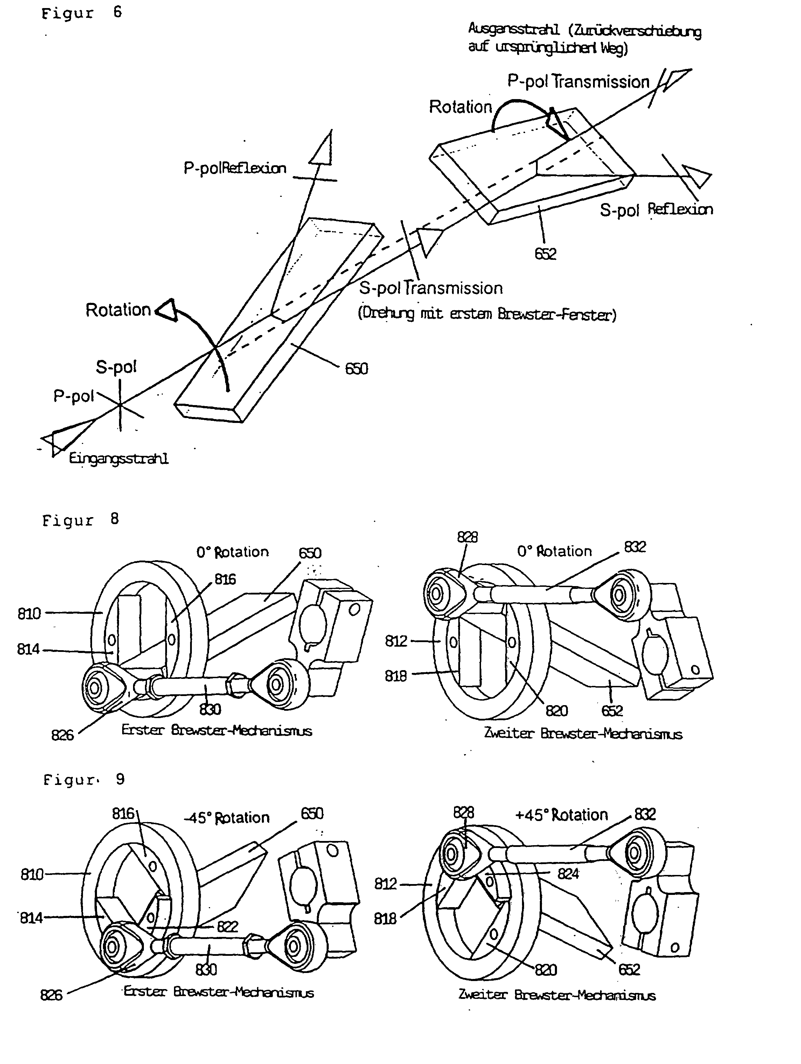

Fig. 6 zeigt eine Anordnung aus zwei Brewster-Elementen 650, 652 zur Erläuterung der Erfindung, die in entgegengesetzte Richtung jeweils um ungefähr 45° gedreht werden, um die Transmission vom Maximum zum Minimum zu steuern. Die Brewster-Elemente 650, 652 sind vorzugsweise beschichtet, um einen Transmissionsbereich von 100% bis 0% zu erhalten, wenn sie um 90° gedreht werden. Fig. 6 zeigt einen Eingangsstrahl, wobei zum Zwecke der Erläuterung sowohl P-Polarisation als auch S-Polarisation dargestellt sind. Ein Fachmann wird verstehen, daß ein Laserstrahl in der Regel nur in eine Richtung polarisiert ist, genauer gesagt ungefähr 99% in einer Richtung und der Rest senkrecht zu dieser Richtung. Ein Beispiel eines geeigneten Lasers, der in vorliegenden Erfindung eingesetzt werden kann, ist ein CO₂-Laser, wobei die Erfindung hierauf nicht begrenzt ist.

Die Erfindung ist im folgenden erläutert, mit Bezug auf die Fig. 4 und 6. Fig. 4 zeigt die zwei Brewster-Elemente 450, 452 in ihrer Anfangspositionen, also ehe sie gedreht wurden. Fig. 6 zeigt die zwei Brewster-Elemente 650, 652 in ihrer Endstellungen, nachdem sie um +/- 45° gedreht wurden. Die vorliegende Erfindung wird in bezug auf einen Laserstrahl mit S-Polarisation erläutert.

In Fig. 4 wird der Laserstrahl mit S-Polarisation auf das erste Brewster-Element 450 gelenkt, das 100% der S-Polarisation hindurchläßt - und den Rest, ungefähr 1%, P-Polarisation reflektiert. Diese 1% unerwünschte P-Polarisation können durch Verwendung von beschichteten oder unbeschichteten statischen Brewster-Elementen, die vor der erfindungsgemäßen Einrichtung angebracht sind, abgefangen werden. Das erste Brewster-Element 450 versetzt den S-polarisierten Laserstrahl um einen Offset, wie in Fig. 4 gezeigt. Das zweite Brewster-Element 452 lässt in seiner Anfangsstellung ebenfalls 100% der S-Polarisation durch und reflektiert den Rest P-Polarisation, soweit vorhanden. Zusätzlich verschiebt das zweite Brewster-Element 452 den Laserstrahl zurück auf seinen ursprünglichen vertikalen Weg, wobei der transmittierte Strahl zum einfallenden Strahl in horizontaler Richtung eine geringe parallele Versetzung erfährt.

Mit Bezug auf Fig. 6 wird das erste Brewster-Element 650 um die Achse des Laserstrahls um 45° in eine erste Richtung gedreht. Die Transmissionskurve für die S-Polarisation geht dabei von 100% zu 50% Durchlässigkeit. D.h. der S-polarisierte Strahl wird zunächst zu 100% und dann abnehmend bis zu 50% hindurchgelassen, während das erste Brewster-Element gedreht wird, der Rest des S-polarisierten Strahls wird reflektiert. Zudem wird die S-Polarisierung des Strahls (der S-polarisierte Strahl), welcher das erste Brewster-Element verläßt, zusammen mit dem ersten Brewster-Element 650 um 45° gedreht.

Gleichzeitig wird das zweite Brewster-Element 652 um die Achse des Laserstrahls in die entgegengesetzte Richtung um 45° gedreht.

Nach der Drehung beider Brewster-Elemente 650, 652 in entgegengesetzte Richtungen, um 45°, wird somit 50% des S-polarisierten Strahls, gedreht um 45°, von dem ersten Brewster-Element 650 zu dem zweiten Brewster-Element 652 hindurchgelassen. Da das zweite Brewster-Element 652 um -45° gedreht wurde und der S-polarisierte Strahl um +45° gedreht wurde, ist der effektive relative Winkel zwischen dem zweiten Brewster-Element 652 und dem gedrehten S-polarisierten Strahl 90°. Durch Drehung des ersten Brewster-Elements 650 in die erste Richtung und des zweiten Brewster-Elements 652 in die entgegengesetzte Richtung geht somit der relative Winkel zwischen dem ursprünglichen S-polarisierten Strahl und dem zweiten Brewster-Element 652 von 0° auf 90°, so daß die Transmission des zweiten Brewster-Elements 652 von 100 % auf 0 % des S-polarisierten Strahls geht. Als Resultat ist der das zweite Brewster-Element 652 verlassende Strahl ein kontrollierter Wert des S-polarisierten Strahls zwischen 100% und 0%, wobei der Rest des S-polarisierten Strahls reflektiert wird. Zusätzlich verschiebt das zweite Brewster-Element 652 den Laserstrahl zurück auf seinen ursprünglichen vertikalen Weg.

Zusammengefaßt müssen gemäß der Ausführungsform der Fig. 6 die beiden Brewster-Elemente jeweils nur um 45° gedreht werden, wenn das erste Brewster-Element 650 in eine Richtung und das zweite Brewster-Element 652 in die entgegengesetzte Richtung gedreht wird, um die Transmission vom Maximum zum Minimum zu steuern.

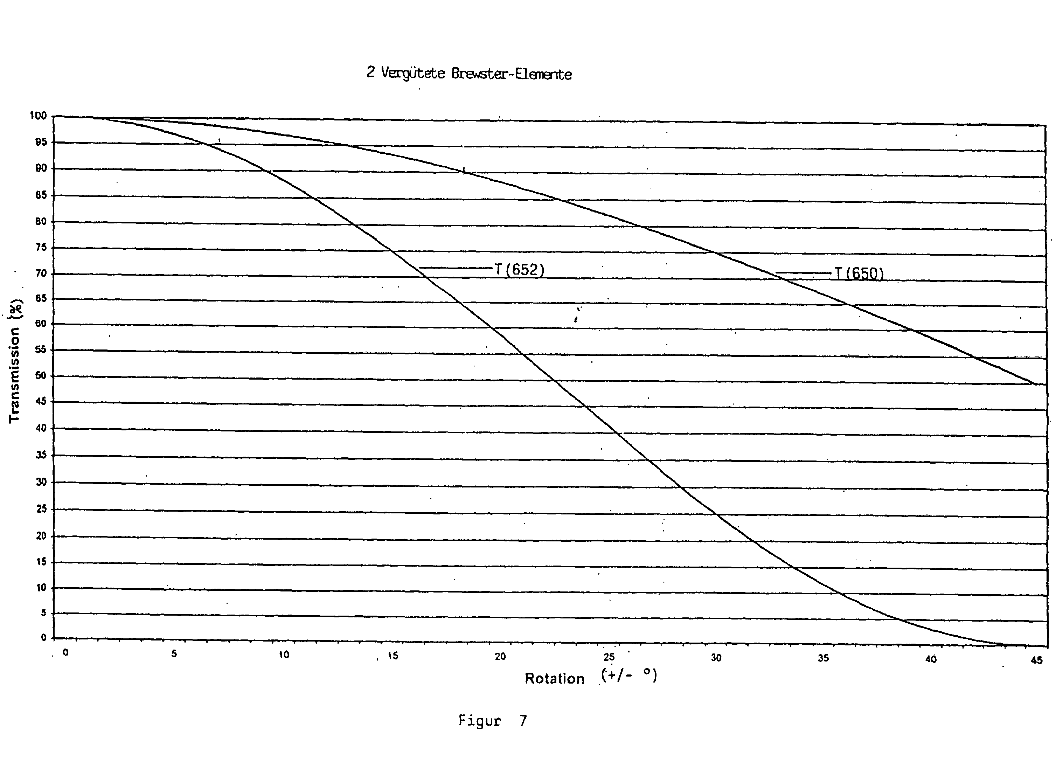

Dies ist noch besser darstellbar mit Hilfe der Transmissionskurven des Laserstrahls in Fig. 7, der von dem ersten und dem zweiten Brewster-Element 650, 652 hindurchgelassen wird. Die Transmissionskurve des ersten Brewster-Elements 650 ist mit T(650) bezeichnet und die kombinierte Übertragungskurve des ersten und des zweiten Brewster-Elements 650, 652 ist mit T(652) bezeichnet. Es wird wieder angenommen, daß beschichtete, voll vergütete Brewster-Elemente verwendet werden, die jeweils eine Transmission von 100 % bis 0 % haben, wenn sie um 90° gedreht werden. Die Transmissionskurve des ersten Brewster-Elements T(650) zeigt, daß die Transmission von 100 % auf 50 % geht, wenn das Brewster-Element ausgehend von 0° um 45° gedreht wird. Gleichzeitig wird das zweite Brewster-Element 652 in die entgegengesetzte Richtung gedreht, um die Übertragungskurve T(652) zu erzeugen, die von 100 % auf 0 % bei 45° geht. Messungen haben gezeigt, daß die resultierende Transmissionskurve der zwei Brewster-Elemente 650, 652 dem oben erläuterten Verhalten entspricht.

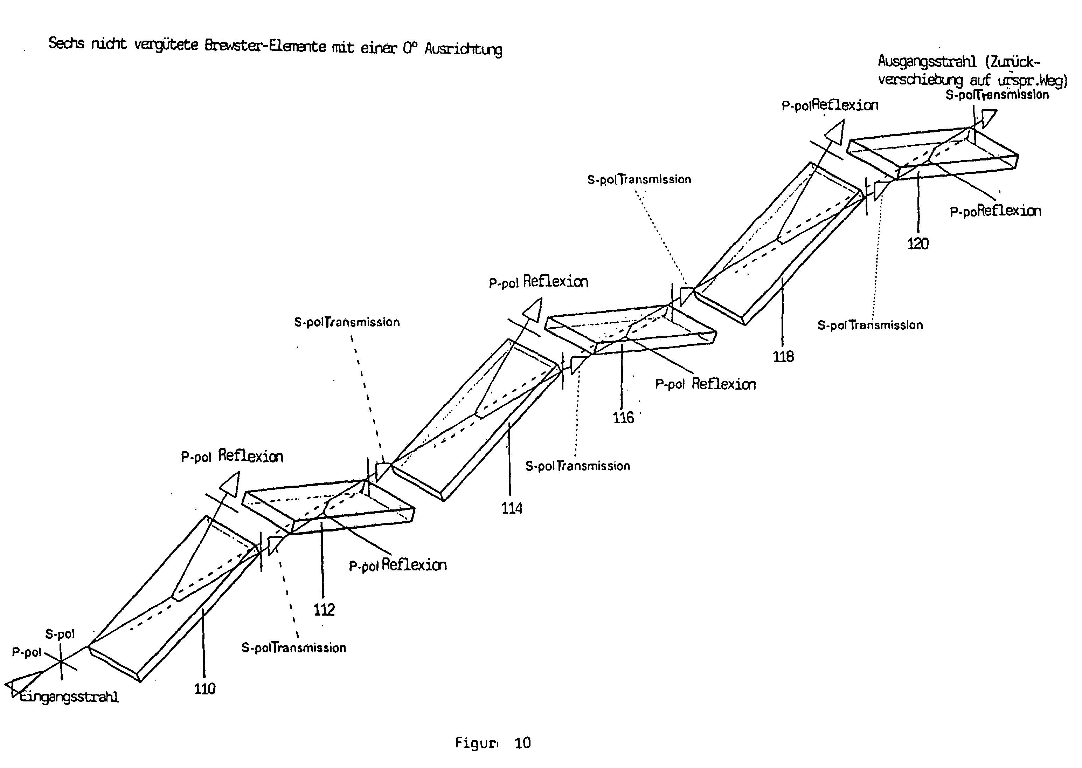

Fig. 8 und 9 zeigen eine Anordnung zum mechanischen Antreiben der zwei Brewster-Element 650, 652, synchron und in entgegengesetzte Richtungen. Jedes Brewster-Element 650, 652 wird in einem Kugellager 810, 812 gehalten und mittels jeweils nur zwei Seitenelemente 814, 816, 818, 820 und einer Grundplatte 822, 824, an der eine direkte Verbindung 826, 828 zu einem Hebel 830, 830 angebracht ist, montiert. Der Hebel 830, 832 wird auf der Spindel eines Motors (nicht gezeigt) gedreht. Erfindungsgemäß können die Brewster-Elemente 650, 652 mittels eines oder zwei Motoren gedreht werden, z.B. galvanometrische Motoren, Spindelmotoren oder alle anderen geeigneten Motoren.

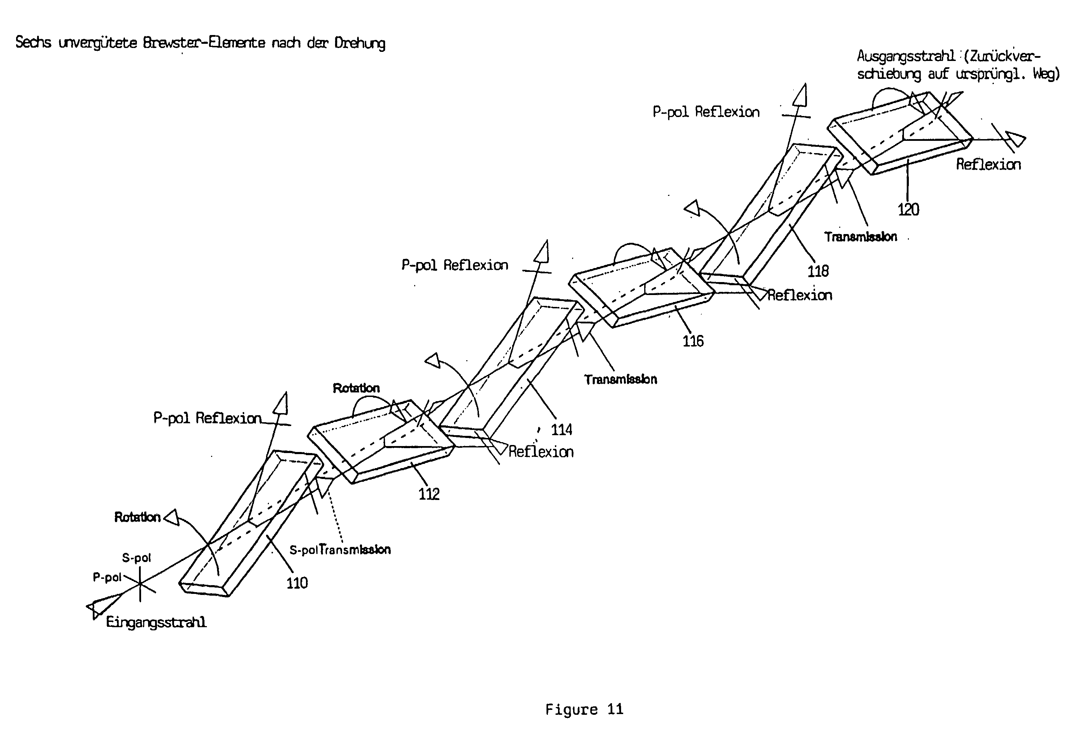

Fig. 10 und 11 zeigen eine Anordnung aus sechs Brewster-Elementen gemäß einer Ausführungsform der Erfindung. Während in einer bevorzugten Ausführungsform der Erfindung mehrere Paare Brewster-Elemente verwendet werden, ist die Erfindung auf keine bestimmte Anzahl von Paaren beschränkt, sondern könnte unter Verwendung von zwei Paaren, drei Paaren, etc. realisiert werden.

Fig. 10 zeigt drei Paare Brewster-Elemente 110 und 112, 114 und 116, 118 und 120, wobei jedes Paar Brewster-Elemente entlang einer Achse des Laserstrahls angeordnet ist, und die Brewster-Elemente innerhalb jedes Paares relativ zueinander so ausgerichtet sind, daß durch die Wirkung des jeweils zweiten Brewster-Elements der durch das erste Brewster-Element erzeugte vertikale Versatz des Laserstrahls ausgeglichen wird. Durch den Einsatz von zwei oder einer anderen geradzahligen Anzahl von Paaren von Brewster-Elementen und einer gegenläufigen Rotationsrichtung der jeweiligen ersten bzw. zweiten Brewster-Elemente jeden Paares, lassen sich sowohl die vertikale wie auch die horizontale Verschiebung des Laserstrahls beim Durchgang durch die gesamte Anordnung vermeiden. Dies ist in Fig. 10 gezeigt. Ebenfalls in Fig. 10 ist gezeigt, daß die Brewster-Elemente 110 bis 120 bei einem Winkel von 0° ausgerichtet sind, um für einen ausgewählten Laserstrahl mit einer linearen Polarisation, z.B. eines CO₂-Laserstrahls, eine Transmission von 100% vorzusehen. Das Verhalten des durch die sechs Brewster-Elemente 106 bis 110 hindurchtretenden Laserstrahls ist im wesentlichten genauso wie mit Bezug auf Fig. 4 beschrieben. Diese Beschreibung wird hier deshalb nicht nochmals wiederholt.

In der Ausführungsform der Fig. 10 ist angenommen, daß unbeschichtete bzw. unvergütete Brewster-Elemente verwendet werden, die den Vorteil haben, daß sie Laserstrahlen mit sehr hoher Leistung, bis zu 6 kW oder darüber, hindurchlassen können, während ein beschichtetes Brewster-Element üblicherweise beschädigt würde, wenn es einem Laserstrahl ausgesetzt wird, dessen Leistung deutlich über 1 kW liegt. Die unbeschichteten bzw. nicht vergüteten Brewster-Elemente haben den scheinbaren Nachteil, daß sie keine Transmission von 100% bis 0% erreichen können, wenn sie um 90° gedreht werden, sondern "nur" von 100% bis z.B. ungefähr 25%, abhängig von der Art des Laserstrahls und dem für das Brewster-Element verwendeten Material. Dieser scheinbare Nachteil wird von der Erfindung durch die Verwendung mehrerer Paare Brewster-Elemente kompensiert, wie unten erläutert.

Fig. 11 zeigt die Anordnung aus drei Paaren Brewster-Elemente 110 und 112, 114 und 116, 118 und 120 der Fig. 10, wobei die zwei Brewster-Elemente jedes Paares in entgegengesetzte Richtungen ausgehend von 0° um einen Winkel von zwischen 45° und 90° gedreht werden, um die Gesamtdurchlässigkeit für den Laserstrahl vom Maximum bis zum Minimum zu steuern. Das Verhalten des Laserstrahls, der durch jedes Paar Brewster-Elemente hindurchgelassen wird, entspricht in Bezug auf die Drehung der Polarisation und die Verringerung der Transmission, im allgemeinen dem Verhalten, das mit Bezug auf Fig. 6 beschrieben wurde. Die Beschreibung wird daher hier nicht wiederholt. Es besteht jedoch ein Unterschied zwischen unbeschichteten und beschichteten Brewster-Elementen dahingehend, daß die Transmission des unbeschichteten Brewster-Elements sich von der des beschichteten Brewster-Elements unterscheidet.

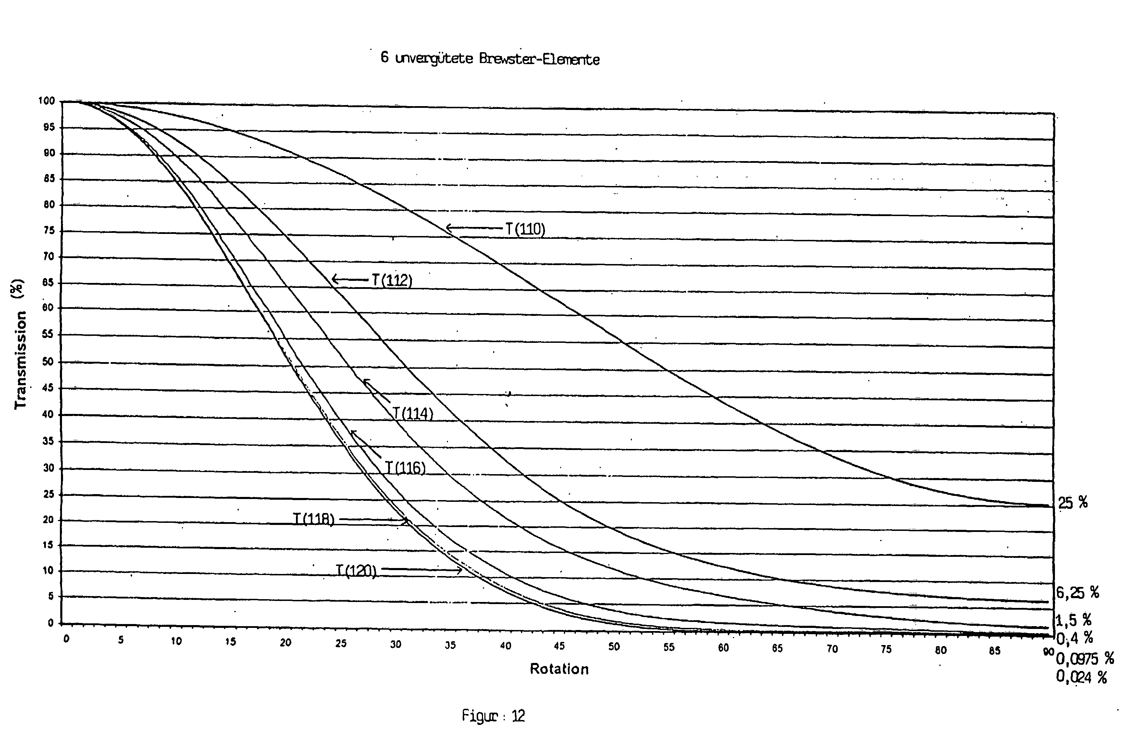

Dies wird deutlicher mit Bezug auf Fig. 12.

Fig.12 zeigt die Transmissionskurven der sechs Brewster-Elemente 110 bis 120 der Fig. 11, wenn sie, innerhalb jedes Paares in entgegengesetzte Richtungen, um 90° gedreht werden. Die Transmissionskurve des ersten Brewster-Elements 110 ist mit T(110) bezeichnet. Die kombinierte Transmissionskurve des ersten und des zweiten Brewster-Elements 110, 112 ist mit T(112) bezeichnet, etc. Die Transmissionskurve des Ausgangsstrahls, der das letzte Brewster-Element 120 verläßt, ist schließlich mit T(120) bezeichnet. Wie sich aus Fig. 12 ergibt, geht die Transmissionskurve des ersten Brewster-Elements 110 von 100 % auf etwa 25 %, wenn das Brewster-Element 110 um 90° gedreht wird. Der Ausgangsstrahl des ersten Brewster-Elements 110 wird von dem zweiten Brewster-Element 112 hindurchgelassen, das in Abhängigkeit von der Rotation wiederum eine Reduktion von 100 % auf 25 % bewirkt, wodurch ein Ausgangsstrahl des zweiten Brewster-Elementes 112 entsteht, der von 100% auf 6,25 % der Eingangsstrahlenergie verringert wird, wenn das erste und das zweite Brewster-Element 110, 112 in der richtigen Weise gedreht werden. Nachdem der Laserstrahl durch alle sechs Brewster-Elemente 110 bis 120 hindurchgegangen ist, welche jeweils ausgehend von 0° in der richtigen Weise gedreht wurden, wird nur ungefähr 0,024 % des Eingangslaserstrahls das sechste und letzte Brewster-Element 120 verlassen.

Während die erste Ausführungsform der Erfindung vorzugsweise für das Schneiden und Markieren von Polymeren verwendet wird, eignet sich die zweite Ausführungsform der Erfindung besonders für Hochleistungs-Laserstrahlanwendungen, wie zum Beispiel, aber nicht ausschließlich das Schneiden und Markieren von Metall. In solchen Anwendungen sind kleine Laserstrahl-Leistungen unschädlich und können vernachlässigt werden. Eine Untersuchung der Transmissionskurven der Fig. 12 zeigt dem Fachmann somit, daß es dann, wenn er z.B. drei Paare Brewster-Elemente verwendet, ausreichend ist, jedes Paar, in entgegengesetzte Richtung, um einen Winkel zwischen 50° und 55° zu drehen. Wenn beispielsweise nur zwei Paare Brewster-Elemente verwendet würden, wäre es für viele Anwendungen ausreichend, jedes Paar der Brewster-Elemente, in entgegengesetzte Richtung, um einen Winkel von zwischen ungefähr 55° und 65° zu drehen, um die Transmission des Laserstrahls von einem Maximum auf ein ausreichend niedriges Minimum zu steuern.

Man wird verstehen, daß die in den Zeichnungen gezeigten Übertragungskurven, die Winkelbereiche für die Drehung der Brewster-Elemete und die Anzahl der verwendeten Paare der Brewster-Elemente, beschichtet oder unbeschichtet, die hier dargelegt wurden, lediglich der Erläuterung dienen und in keiner Weise die Erfindung beschränken sollen. Abhängig von der jeweiligen Anwendung, der Art und Energie des Laserstrahls sowie des Brewster-Elements und seiner Beschichtung können beliebige andere geeignete Werte für diese Parameter gewählt werden.

Die vorliegende Erfindung hat mehrere Vorteile.

Durch die Drehung der Brewster-Elemente um einen Winkel zwischen 0° und 45° ergibt sich der Vorteil höherer Geschwindigkeiten, mit denen die Erfindung arbeiten kann.

Durch die Verwendung mehrere Paare von Brewster-Elementen lassen sich die zur Transmissionssteuerung notwendigen maximalen Ablenkwinkel weiter reduzieren, die Geschwindigkeiten erhöhen und die horizontale und vertikale Verschiebung des Laserstrahls kompensieren.

Durch Drehen der Brewster-Elemente nur um maximal 45°, anstelle von 90°, ergeben sich zusätzliche Vorteile bei der Motorisierung des Systems, wobei z.B. galvanometrische Motoren in diesem Fall wesentlich besser arbeiten.

Mit Bezug auf die Ausführungsform der Fig. 6 wird durch Drehung der Brewster-Elemente um ungefähr +/- 45° (oder umgekehrt) maximal die halbe S-Polarisation des Laserstrahls von dem ersten Brewster-Element reflektiert, wobei der Rest, der zusammen mit dem ersten Brewster-Element gedreht wird, von dem zweiten Brewster-Element reflektiert wird. Unter der vereinfachten Annahme, daß spezielle Parameter und das Verhalten der Beschichtung der zwei Brewster-Elemente näherungsweise vernachlässigt werden können, erlaubt die Kombination der zwei Brewster-Elemente die Steuerung der doppelten Laserstrahlenergie, da die Energie der von den zwei Brewster-Elementen jeweils reflektierten Anteile des Laserstrahls gleichmäßig auf zwei Energiefallen verteilt werden kann.

Bei Verwendung unbeschichteter Brewster-Elemente, wie bei der zweiten Ausführungsform der Erfindung, hat die Erfindung den zusätzlichen Vorteil, daß sie die Handhabung und Steuerung von Laserstrahlen hoher Leistung von bis zu 6 kW erlaubt.

Die Erfindung sieht in gleicher Weise auch ein Verfahren und eine Vorrichtung vor, bei dem die Brewster-Elemente eine Beschichtung aufweisen, die Laserenergien von zwischen 1 und 6 kW aushalten kann und deren Verhalten irgendwo zwischen den beschichteten bzw. vergüteten und den unbeschichteten bzw. nicht vergüteten Brewster-Elementen liegt.

## Patentansprüche

1. Verfahren zum Steuern der Laserstrahlenergie eines Laserstrahls mittels mehrerer Paare Brewster-Elemente (110 - 120), die mit ihren Drehachsen entlang einer Achse ausgerichtet sind, die parallel zur Richtung des Laserstrahls ist, wobei jedes Paar ein erstes Brewster-Element (110, 114, 118) und ein zweites Brewster-Element (112, 116, 120) umfaßt, wobei die Brewster-Elemente (110 - 120) um diese Achse gedreht werden, und wobei das erste Brewster-Element (110, 114, 118) eines Paares in eine Richtung und das zweite Brewster-Element (112, 116, 120) eines Paares in die entgegengesetzte Richtung gedreht wird.

2. Verfahren nach Anspruch 1, **dadurch gekennzeichnet, daß** das erste Brewster-Element (110, 114, 118) jedes Paares und das zweite Brewster-Element (112, 116, 120) jedes Paares gleichzeitig um den gleichen Winkelbetrag gedreht werden.

3. Verfahren nach Anspruch 1, wobei das erste und das zweite Brewster-Element (110 - 120) jedes Paares synchron jeweils um ungefähr +45° bzw. -45° gedreht werden, um die Transmission des Laserstrahls vom Maximum zum Minimum und umgekehrt zu steuern.

4. Verfahren nach Anspruch 1, wobei das erste und das zweite Brewster-Element (110 - 120) jedes Paares synchron, jeweils um einen Winkel vom +m° bzw. -m° gedreht werden, wobei 45 ≤ m ≤ 90, um die Transmission des Laserstrahls vom Maximum zum Minimum und umgekehrt zu steuern.

5. Verfahren nach Anspruch 1, wobei zwei oder drei Paare Brewster-Elemente (110 - 120) jedes Paares vorgesehen werden.

6. Verfahren nach einem der vorangehenden Ansprüche, wobei der Laserstrahl ein linear polarisierter Laserstrahl ist.

7. Vorrichtung zum Steuern der Laserstrahlenergie eines Laserstrahls, mit mehreren Paaren Brewster-Elemente (110 - 120), wobei jedes Paar ein erstes und ein zweites Brewster-Element umfaßt, die entlang einer Achse ausgerichtet sind, die parallel zur Richtung des Laserstrahls ist, und mit einer Antriebseinrichtung (810 - 832) zum Drehen der Brewster-Elemente (110 - 120 ) jedes Paares um die Achse, wobei die Antriebseinrichtung dazu geeignet ist, das erste Brewster-Element (110, 114, 118) jedes Paares in eine erste Richtung und das zweite Brewster-Element jedes Paares (112, 116, 120) in eine zweite, entgegengesetzte Richtung zu drehen.

8. Vorrichtung nach Anspruch 7, wobei die Brewster-Elemente (110 - 120) jedes Paares beschichtet sind.

9. Vorrichtung nach Anspruch 7, mit zwei oder drei Paaren Brewster-Fenster (110 - 120).

10. Vorrichtung nach einem der Ansprüche 7 bis 9, mit einer Laserquelle zum Erzeugen eines linear polarisierten Laserstrahls.

11. Vorrichtung nach Anspruch 10, wobei die Laserquelle einen CO₂-Laser mit einer Ausgangsleistung zwischen 0.1 und 6 kW umfaßt.

## Claims

1. A method of controlling the laser beam energy of a laser beam, using a plurality of pairs of Brewster elements (110-120) which, with their rotational axes, are aligned along an axis which is parallel to the direction of the laser beam, each pair comprising a first Brewster element (110, 114, 118) and a second Brewster element (112, 116, 120), wherein said Brewster elements (110-120) are rotated around said axis, and wherein the first Brewster elements (110, 114, 118) of a pair is rotated in one direction and the second Brewster element (112, 116, 120) of a pair is rotated in the opposite direction.

2. The method of claim 1, **characterized in that** the first Brewster element (110, 114, 118) of each pair and the second Brewster element (112, 116, 120) of each pair are rotated simultaneously by the same angular amount.

3. The method of claim 1, wherein the first and second Brewster elements (110-120) of each pair are rotated in synchronism, each through about +45° and -45°, respectively, to control transmission of the laser beam from maximum to minimum and vice-versa.

4. The method of claim 1, wherein the first and second Brewster elements (110-120) of each pair are rotated in synchronism, each through an angle of +m degree and -m degree, respectively, wherein 45 ≤ m ≤ 90, to control transmission of the laser beam from maximum to minimum and vice-versa.

5. The method of claim 1 wherein two or three pairs of Brewster elements (110-120) are provided.

6. The method of one of the preceding claims, wherein the laser beam is a linearly polarised laser beam.

7. An apparatus for controlling the laser beam energy of a laser beam, comprising a plurality of pairs of Brewster elements (110-120), each pair including first and second Brewster elements, which are aligned along an axis which is parallel to the direction of the laser beam, and driving means (810-832) for rotating said Brewster elements (110-120) of each pair around said axis, wherein said driving means are adapted to rotate the first Brewster element (110, 114, 118) of each pair in a first direction and the second Brewster element (112, 116, 120) of each pair in a second, opposite direction.

8. The apparatus of claim 7, wherein the Brewster elements (110-120) of each pair are coated.

9. The apparatus of claim 7, comprising two or three pairs of Brewster elements (110-120).

10. The apparatus of one of claims 7 to 9, comprising a laser source for generating a linearly polarised laser beam.

11. The apparatus of claim 10, wherein the laser source comprises a CO₂ laser having an output power of between 0.1 and 6 kW.

## Revendications

1. Procédé de contrôle de l'énergie d'un rayon laser à l'aide de plusieurs paires d'éléments de Brewster (110 à 120) orientés le long d'un axe parallèle à la direction du rayon laser, moyennant quoi chaque paire comprend un premier élément de Brewster (110, 114, 118) et un deuxième élément de Brewster (112, 116, 120), moyennant quoi les éléments de Brewster (110 à 120), avec leur axe de rotation, sont tournés autour de cet axe et moyennant quoi le premier élément de Brewster (110, 114, 118) d'une paire est tourné dans une direction et le deuxième élément de Brewster (112, 116, 120) d'une paire est tourné dans une direction opposée.

2. Procédé selon la revendication 1, **caractérisé en ce que** le premier élément de Brewster (110, 114, 118) de chaque paire et le deuxième élément de Brewster (112, 116, 120) de chaque paire sont tournés en même temps de la même valeur angulaire.

3. Procédé selon la revendication 1, moyennant quoi le premier et le deuxième élément de Brewster (110 à 120) sont chacun tournés de manière synchrone d'environ +/-45°, afin de contrôler la transmission du rayon laser du maximum au minimum et inversement.

4. Procédé selon la revendication 1, moyennant quoi le premier et le deuxième élément de Brewster (110 à 120) sont chacun tournés de manière synchrone ,d'un angle de +m° ou -m°, moyennant quoi 45 ≤ m ≤ 90, afin de contrôler la transmission du rayon laser du maximum au minimum et inversement.

5. Procédé selon la revendication 1, moyennant quoi deux ou trois paires d'éléments de Brewster (110 à 120) sont prévues.

6. Procédé selon l'une des revendications précédentes, moyennant quoi le rayon laser est un rayon laser polarisé de manière linéaire.

7. Dispositif de contrôle de l'énergie d'un rayon laser avec plusieurs paires d'éléments de Brewster (110 à 120), moyennant quoi chaque paire comprend un premier élément de Brewster et un deuxième élément de Brewster, orientés le long d'un axe parallèle à la direction du rayon laser, et un dispositif d'entraînement (810 à 832) pour tourner les éléments de Brewster (110 à 120) de chaque paire autour de l'axe, moyennant le dispositif d'entraînement sert à tourner le premier élément de Brewster (110, 114, 118) de chaque paire dans une première direction et le deuxième élément de Brewster (112, 116, 120) de chaque paire dans une deuxième direction opposée.

8. Dispositif selon la revendication 7, moyennant quoi les éléments de Brewster (110 à 120) de chaque paire sont revêtus.

9. Dispositif selon la revendication 7, avec deux ou trois paires de fenêtres de Brewster (110 à 120).

10. Dispositif selon l'une des revendications 7 à 9, avec une source de laser pour générer un rayon laser polarisé de manière linéaire.

11. Dispositif selon la revendication 10, moyennant quoi la source de laser comprend un laser au CO₂ avec une puissance de sortie entre 0,1 et 6 kW.
